# EUROPEAN PATENT APPLICATION

(11) **EP 4 835 999 A2**
(43) Date of publication of application: **04.11.2026**
(21) Application number: 26205929.8
(22) Date of filing: 17.09.2026
(51) Int. Cl.: H01M 4/38, H01M 4/36, H01M 4/62, H01M 4/133, H01M 10/0525, H01M 4/02

(54) **NEGATIVE ELECTRODE MATERIAL, SECONDARY BATTERY, AND ELECTRONIC APPARATUS**

(30) Priority: 19.09.2025 CN 202511346182
(71) Applicant: Ningde Amperex Technology Limited, Ningde, Fujian 352100 (CN)
(72) Inventor: LI, Liang, Ningde, 352100 (CN)
(74) Representative: Dehns Germany Partnerschaft mbB

(57) **Abstract**

This application provides a negative electrode material, a secondary battery, and an electronic apparatus. The negative electrode material includes silicon-carbon particles. A perimeter of a cross section of the silicon-carbon particles is L µm. A contour line of the cross section includes at least one linear segment feature portion. A length of the feature portion is X µm, where 0.2≤X/L≤0.8.

## Description

### TECHNICAL FIELD

This application relates to the field of energy storage technologies, and specifically, to a negative electrode material, a secondary battery, and an electronic apparatus.

### BACKGROUND

Secondary batteries, as energy storage apparatuses that can be repeatedly charged and discharged, play a vital role in modern society and are widely used in fields such as portable electronic apparatuses, electric vehicles, and energy storage systems. The basic principle is to achieve storage and release of electric energy through intercalation and deintercalation of lithium ions between positive and negative electrode materials. In a secondary battery, the negative electrode material serves as a carrier for lithium ions and has a decisive impact on the overall performance of the battery. An ideal negative electrode material should have excellent energy density and conductivity.

However, with the continuous development of secondary battery technology, improving the cycling performance has become an urgent technical problem to be resolved. Cycling performance is related to the capacity retention capability of the secondary battery and is crucial for meeting the service life requirements of the battery. Therefore, how to improve the cycling performance of secondary batteries is a key issue in promoting the continuous advancement and wide application of secondary battery technology.

### SUMMARY

In view of this, this application provides a negative electrode material, a secondary battery, and an electronic apparatus. A contour line of a cross section of silicon-carbon particles in the negative electrode material includes at least one linear segment feature portion and 0.2≤X/L≤0.8 is satisfied, which can increase the compacted density of the silicon-carbon particles and improve the cycling performance and low-temperature load performance of the secondary battery.

According to a first aspect, this application provides a negative electrode material. The negative electrode material includes silicon-carbon particles, a perimeter of a cross section of the silicon-carbon particles is L µm, a contour line of the cross section includes at least one linear segment feature portion, and a total length of the linear segment feature portion is X µm, where 0.2≤X/L≤0.8. In this application, the contour line of the cross section of the silicon-carbon particles in the negative electrode material includes the linear segment feature portion, so that a partial region of the surface of the silicon-carbon particles has the planar characteristics, which can increase the compacted density of the silicon-carbon particles, and increase the contact area between the silicon-carbon particles, allowing more binder to be accommodated on the contact interface between the silicon-carbon particles. This enhances the stability of bonding between the silicon-carbon particles, and alleviates the impact of volume changes of the silicon-carbon particles during lithium intercalation and deintercalation on the negative electrode material, facilitating the construction of a stable and efficient conductive network. In addition, the silicon-carbon particles satisfy 0.2≤X/L≤0.8, so that the surface of the silicon-carbon particles includes a region with the planar characteristics having an appropriate area, which can increase the compacted density of the silicon-carbon particles and improve the cycling performance and low-temperature load performance of the secondary battery.

In some embodiments, the negative electrode material satisfies at least one of the following conditions: (1) 0.3≤X/L≤0.7; and (2) 5≤L≤80. The negative electrode material satisfying at least one of the foregoing conditions can further increase the compacted density of the silicon-carbon particles and further improve the cycling performance and low-temperature load performance of the secondary battery.

In some embodiments, an average circularity of the silicon-carbon particles is R, where 0.55≤R≤0.90, and preferably 0.64≤R≤0.85. Adjusting the value of R to satisfy the foregoing range can further increase the compacted density of the silicon-carbon particles and further improve the cycling performance and low-temperature load performance of the secondary battery.

In some embodiments, a compacted density of the silicon-carbon particles is P g/cm³, where 0.97≤P≤1.27. Adjusting the value of P to fall within the foregoing range can further increase the compacted density of the silicon-carbon particles and further improve the cycling performance and low-temperature load performance of the secondary battery.

In some embodiments, the negative electrode material includes graphite particles, and an average aspect ratio of the graphite particles is Y, where 1.1≤Y≤3.7, and preferably 1.3≤Y≤3.2. Adjusting the value of Y to fall within the foregoing range can further increase the compacted density of the silicon-carbon particles and further improve the cycling performance and low-temperature load performance of the secondary battery.

In some embodiments, the silicon-carbon particles include particles to be tested, a particle size of the particles to be tested falls within a range of 6 µm to 10 µm, and a straightness tolerance of the linear segment feature portion is not greater than 0.2 µm.

According to a second aspect, this application further provides a secondary battery, including a positive electrode, a negative electrode, and an electrolyte. The negative electrode includes a negative electrode current collector and a negative electrode material layer located on at least one surface of the negative electrode current collector, where the negative electrode material layer includes the negative electrode material according to the first aspect.

In some embodiments, an adhesion force between the negative electrode material layer and the negative electrode current collector is F1 N/m, where 41≤F1≤135. Adjusting the value of F1 to satisfy the foregoing range can further improve the cycling performance and low-temperature load performance of the secondary battery.

In some embodiments, the electrolyte includes a first type of lithium salt additive, the first type of lithium salt additive includes at least one selected from the group consisting of lithium tetrafluoroborate, lithium bis(trifluoromethanesulfonyl)imide, and lithium difluorophosphate, and a mass percentage of the first type of lithium salt additive is S1% based on a mass of the electrolyte, where 0.2≤S1≤5. The electrolyte includes the first type of lithium salt additive and the value of S1 is adjusted to satisfy the foregoing range, so that the cycling performance and low-temperature load performance of the secondary battery can be further improved.

In some embodiments, the electrolyte includes fluoroethylene carbonate, and a mass percentage of the fluoroethylene carbonate is S2% based on the mass of the electrolyte, where 0.5≤S2/S1≤20, and preferably 3≤S2/S1≤17. The electrolyte further includes the fluoroethylene carbonate and the value of S2/S1 is adjusted to fall within the foregoing range, so that the cycling performance and low-temperature load performance of the secondary battery can be further improved.

In some embodiments, the electrolyte includes a nitrile compound, and a mass percentage of the nitrile compound is S3% based on a mass of the electrolyte, where 3.2≤S3≤9.8, and preferably 4.8≤S3≤8.2. The nitrile compound includes at least one selected from the group consisting of malononitrile, ethylene glycol bis(propionitrile) ether, succinonitrile, glutaronitrile, adiponitrile, 1,2,3-propanetricarbonitrile, 1,3,5-pentanetricarbonitrile, 1,3,6-hexanetricarbonitrile, and 1,2,3-tris(2-cyanoethoxy)propane. The electrolyte includes the nitrile compound and the value of S3 is adjusted to satisfy the foregoing range, so that the cycling performance and low-temperature load performance of the secondary battery can be further improved.

In some embodiments, the secondary battery satisfies at least one of the following conditions: (1) the negative electrode material layer further includes a binder, and the binder includes at least one selected from the group consisting of polyacrylate, polyacrylic acid, polyimide, polyamide, polyamideimide, polyvinylidene fluoride, styrene-butadiene rubber, sodium alginate, polyvinyl alcohol, polytetrafluoroethylene, polyacrylonitrile, sodium carboxymethyl cellulose, potassium carboxymethyl cellulose, sodium hydroxymethyl cellulose, and potassium hydroxymethyl cellulose; (2) the negative electrode material layer further includes a conductive agent, and the conductive agent includes at least one selected from the group consisting of conductive carbon black, carbon nanotubes, and flake graphene; and (3) the silicon-carbon particles include porous carbon and silicon particles at least partially located in internal voids of the porous carbon. The secondary battery satisfying at least one of the foregoing conditions can further improve the cycling performance and low-temperature load performance of the secondary battery.

According to a third aspect, this application further provides an electronic apparatus including the secondary battery according to the second aspect.

### BRIEF DESCRIPTION OF DRAWINGS

FIG. 1 is a cross-sectional view of a silicon-carbon particle according to an embodiment of this application;
FIG. 2 is a cross-sectional view of another silicon-carbon particle according to an embodiment of this application; and
FIG. 3 is a cross-sectional view of yet another silicon-carbon particle according to an embodiment of this application.

### DETAILED DESCRIPTION

To make the objectives, technical solutions, and advantages of this application more comprehensible, the following further describes this application in detail with reference to the embodiments. It should be understood that the specific embodiments described herein are merely used to explain this application but are not intended to limit this application.

To resolve the problems in the prior art, the inventor of this application provides a negative electrode material. The negative electrode material includes silicon-carbon particles, a perimeter of a cross section of the silicon-carbon particles is L µm, a contour line of the cross section includes at least one linear segment feature portion, and a total length of the linear segment feature portion is X µm, where 0.2≤X/L≤0.8, and preferably 0.3≤X/L≤0.7. The value of X/L may be 0.2, 0.3, 0.4, 0.5, 0.7, 0.8, or within a range defined by any two of these values. In this application, the silicon-carbon particles in the negative electrode material include the feature portion and 0.2≤X/L≤0.8 is satisfied, which can increase the compacted density of the silicon-carbon particles and improve the cycling performance and low-temperature load performance of the secondary battery.

Making the morphology of the silicon-carbon particles in the negative electrode material tend to be spherical facilitates the close packing of the silicon-carbon particles and can alleviate the impact of volume changes of the silicon particles in the silicon-carbon particles during lithium intercalation and deintercalation on the silicon-carbon particles. However, this results in a small contact area between the silicon-carbon particles, poor conductivity, and excessively high compacted density of the negative electrode material. The inventor has found that the silicon-carbon particles in the negative electrode material including the feature portion and 0.2≤X/L≤0.8 being satisfied can increase the compacted density of the silicon-carbon particles and improve the cycling performance and low-temperature load performance of the secondary battery.

The inventor of this application speculates that making the morphology of the silicon-carbon particles in the negative electrode material tend to be spherical facilitates the close packing of the silicon-carbon particles, reduces the damage to the mechanical strength of the negative electrode plate caused by volume changes of the silicon-carbon particles during charging and discharging of the secondary battery, and alleviates side reactions between the surface of the silicon-carbon particles and the electrolyte. However, the contact area between the silicon-carbon particles is small, which is not conducive to the conduction of electrons between the silicon-carbon particles, results in a small adhesion surface of the binder between the silicon-carbon particles, and thus leads to unstable bonding between the silicon-carbon particles. Consequently, volume changes of the silicon-carbon particles during lithium intercalation and deintercalation cause disconnection of the conductive network between the silicon-carbon particles, such that the silicon-carbon particles are unable to participate in subsequent electrochemical reactions, increasing the loss of active substances and active lithium. In addition, more binder needs to be introduced between the silicon-carbon particles to enhance the stability of bonding between the silicon-carbon particles, which further reduces the energy density of the negative electrode material, thereby affecting the cycling performance of the secondary battery. In this application, the contour line of the cross section of the silicon-carbon particles in the negative electrode material includes the linear segment feature portion, so that a partial region of the surface of the silicon-carbon particles has the planar characteristics, which can increase the compacted density of the silicon-carbon particles, alleviate side reactions between the surface of the silicon-carbon particles and the electrolyte, and increase the contact area between the silicon-carbon particles, allowing more binder to be accommodated on the contact interface between the silicon-carbon particles. This enhances the stability of bonding between the silicon-carbon particles, and alleviates the impact of volume changes of the silicon-carbon particles during lithium intercalation and deintercalation on the negative electrode material, facilitating the construction of a stable and efficient conductive network. In addition, the silicon-carbon particles satisfy 0.2≤X/L≤0.8, so that the surface of the silicon-carbon particles includes a region with the planar characteristics having an appropriate area, which can increase the compacted density of the silicon-carbon particles and improve the cycling performance and low-temperature load performance of the secondary battery.

The linear segment feature portion is not necessarily an ideal straight line. A straight segment that is not an ideal straight line but approximates the ideal straight line also belongs to the linear segment feature portion defined in this application and can also improve the cycling performance and low-temperature load performance of the secondary battery. Specifically, a straightness tolerance of the linear segment feature portion is not greater than 0.2 µm. The straightness tolerance is the maximum allowable deviation of an actual line relative to an ideal straight line. A tolerance of 0.2 µm means that the straight segment is required to lie within a region formed by two parallel straight lines with a distance of 0.2 µm, such that the deviation of the straight segment in a direction perpendicular to the straight line does not exceed the two parallel straight lines with a distance of 0.2 µm.

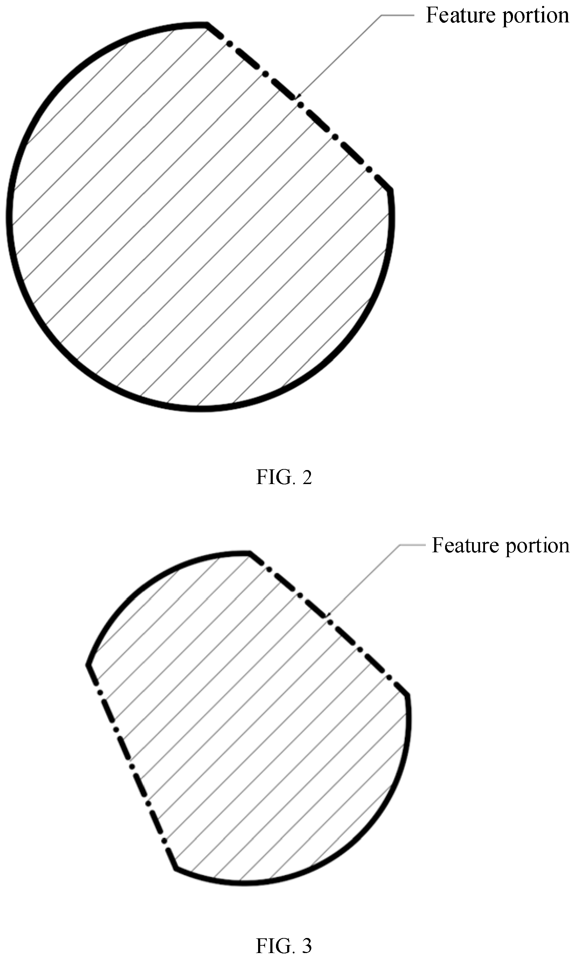

Selecting silicon-carbon particles with a particle size in a range of 6 µm to 10 µm as particles to be tested makes it easier to measure the straightness tolerance of the linear segment feature portion. Therefore, the straightness tolerance test is preferably performed on silicon-carbon particles with a particle size in the range of 6 µm to 10 µm. The contour line of the cross section of the silicon-carbon particles may include one linear segment feature portion. As shown in FIG. 2, when the contour line of the cross section of the silicon-carbon particles includes only one linear segment feature portion, the length of the linear segment feature portion is the total length X µm of the linear segment feature portion.

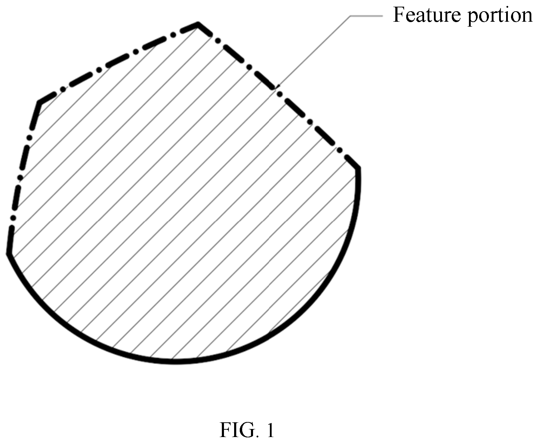

As shown in FIGs. 1 and 3, the contour line of the cross section of the silicon-carbon particles may alternatively include a plurality of linear segment feature portions. The plurality of linear segment feature portions may be adjacent or non-adjacent. When the plurality of linear segment feature portions are adjacent, there are corner points between the plurality of linear segment feature portions. The plurality of linear segment feature portions may alternatively be spaced apart by curved surfaces. When the contour line of the cross section of the silicon-carbon particles includes a plurality of linear segment feature portions, the lengths of individual linear segment feature portions are measured separately and then summed to obtain the total length X µm of the linear segment feature portions.

In some embodiments, 5≤L≤80. The value of L may be 5, 15, 20, 30, 50, 65, 80, or within a range defined by any two of these values. The perimeter of the silicon-carbon particles satisfies the foregoing range, so that the silicon-carbon particles can have an appropriate size, which can further increase the compacted density of the silicon-carbon particles and further improve the cycling performance and low-temperature load performance of the secondary battery.

In some embodiments, an average circularity of the silicon-carbon particles is R, where 0.55≤R≤0.90, and preferably 0.64≤R≤0.85. The value of R may be 0.55, 0.64, 0.67, 0.70, 0.72, 0.76, 0.80, 0.83, 0.85, 0.90, or within a range defined by any two of these values. The average circularity of the silicon-carbon particles satisfies the foregoing range, so that the silicon-carbon particles can have an appropriate morphology, and fully exert the benefits brought by the synergistic effect of the curved region and the planar region, which can further increase the compacted density of the silicon-carbon particles, alleviate the impact of volume changes of the silicon particles in the silicon-carbon particles during lithium intercalation and deintercalation of the silicon-carbon particles on the silicon-carbon particles, and further improve the cycling performance and low-temperature load performance of the secondary battery.

In some embodiments, a compacted density of the silicon-carbon particles is P g/cm³, where 0.97≤P≤1.27. The value of P may be 0.97, 1.03, 1.04, 1.06, 1.09, 1.10, 1.17, 1.21, 1.22, 1.23, 1.25, 1.27, or within a range defined by any two of these values. The value of P satisfies the foregoing range, so that the silicon-carbon particles can have an appropriate compacted density, which can further increase the compacted density of the silicon-carbon particles and further improve the cycling performance and low-temperature load performance of the secondary battery.

In some embodiments, the negative electrode material includes graphite particles, and an average aspect ratio of the graphite particles is Y, where 1.1≤Y≤3.7, and preferably 1.3≤Y≤3.2. The value of Y may be 1.1, 1.3, 1.7, 2.0, 2.4, 2.5, 2.8, 3.2, 3.7, or within a range defined by any two of these values. The aspect ratio of the graphite particles satisfies the foregoing range, so that the graphite particles can have an appropriate morphology, which can increase the contact area between the graphite particles and the silicon-carbon particles, helps to maintain the stability of bonding between the silicon-carbon particles and the graphite particles, and enables the construction of a stable and efficient conductive network between the silicon-carbon particles and the graphite particles. In addition, the graphite particles can have a certain strength, which can alleviate the impact of volume changes of the silicon carbon particles during lithium intercalation and deintercalation on the graphite particles, further increase the compacted density of the silicon-carbon particles, and further improve the cycling performance and low-temperature load performance of the secondary battery.

The silicon-carbon particles in this application can be prepared by using a method including the following steps:
S1. Mix and dissolve a phenolic compound, a stabilizer, and a catalyst at a mass ratio of 1:(0.5-3.5):(0.5-2.5) in an aldehyde solvent, followed by reaction in an inert atmosphere, to obtain a carbon precursor. The phenolic compound includes at least one of phenol, resorcinol, phloroglucinol, or bisphenol A, the stabilizer includes at least one of polyvinyl alcohol, polyethylene glycol, hydroxymethyl cellulose, carboxymethyl cellulose, or polyvinylpyrrolidone, the catalyst includes at least one of hydrochloric acid, sulfuric acid, nitric acid, or oxalic acid, and the aldehyde solvent includes at least one of formaldehyde, acetaldehyde, propionaldehyde, butyraldehyde, or furfural.
S2. Add methacrylic acid to the carbon precursor, maintain the temperature at T°C for reaction for t1 h, then continue to add calcium stearate and magnesium oleate, and maintain the temperature at T°C for reaction for t2 h to obtain an organic precursor. A mass ratio of the methacrylic acid to the phenolic compound is V1%, a mass ratio of the calcium stearate to the phenolic compound is V2%, and a mass ratio of the magnesium oleate to the phenolic compound is V3%, where 120≤T≤180, 0.1≤t1≤1.5, 0.1≤t2≤1.5, 5≤V1≤8, 1≤V2≤2.5, and 0.3≤V3≤2.5.
S3. Perform a curing treatment on the organic precursor to obtain a cured product, perform a carbonization treatment on the cured product in an inert gas atmosphere to obtain a carbonized product, and then sequentially perform activation, silane deposition, and carbon coating treatments on the carbonized product to obtain silicon-carbon particles.

Based on the silicon-carbon particle preparation method in the foregoing example, increasing the addition amount of the methacrylic acid, the calcium stearate, or the magnesium oleate separately or simultaneously can reduce the agglomeration of the carbon precursor during reaction, and thus increases the region with the planar characteristics on the surface of the silicon-carbon particles, thereby increasing the value of X/L. Alternatively, increasing the reaction times t1 and t2 can also reduce the agglomeration of the carbon precursor during reaction, and thus increases the region with the planar characteristics on the surface of the silicon-carbon particles, thereby increasing the value of X/L.

The curing treatment may be as follows: mixing the organic precursor with ammonia water, followed by reaction at T2°C for t3 h and then standing, filtration, washing, and drying in sequence, to obtain a cured product, where 50≤T2≤80 and 2≤t3≤5.

This application further provides a secondary battery including a positive electrode, a negative electrode, and an electrolyte.

### Secondary battery

The secondary battery of this application is not particularly limited, and is divided into various categories depending on the type of electron transmission substances. For example, when the electron transmission substance is lithium (Li, including ions), the secondary battery is a lithium-ion battery. When the electron transmission substance is sodium (Na, including ions), the secondary battery is a sodium-ion battery.

According to an embodiment of this application, the secondary battery may include a battery cell and an electrolyte. The battery cell may include a packaging material and an electrode assembly disposed inside the packaging material, and the electrolyte may be filled in an internal space formed by the packaging material. The packaging material can protect the electrode assembly from external impact and prevent leakage of the electrolyte to the outside. Based on the shape of the packaging material, the battery cell may be divided into the prismatic, cylindrical, or pouch type.

The electrode assembly includes a positive electrode, a negative electrode, and a separator, as well as other components in the secondary battery known in the art. The foregoing other components are not limited in this application. The separator may be located between the positive electrode and the negative electrode.

A preparation method of the secondary battery is not particularly limited in this application. For example, the preparation method may include the following steps: a positive electrode, a separator, and a negative electrode are stacked in sequence and go through operations such as winding and folding as needed to obtain an electrode assembly, the electrode assembly is put into a packaging material, an electrolyte is injected into the packaging material, and the packaging material is sealed to obtain a secondary battery.

### Positive electrode

The positive electrode is not particularly limited in this application, provided that the objectives of this application can be achieved. The positive electrode includes a positive electrode current collector and a positive electrode material layer disposed on at least one surface of the positive electrode current collector. The "positive electrode material layer disposed on at least one surface of the positive electrode current collector" means that the positive electrode material layer may be located on one surface of the positive electrode current collector in its thickness direction, or on two surfaces of the positive electrode current collector in its thickness direction. It should be noted that the "surface" herein may be an entire region or a partial region of the surface of the positive electrode current collector. This is not particularly limited in this application, provided that the objectives of this application can be achieved.

The type, size, and shape of the positive electrode current collector are not particularly limited in this application, provided that it does not cause chemical changes in the battery cell and is electrically conductive. For example, the positive electrode current collector may use stainless steel, aluminum, nickel, titanium, calcined carbon, or a substance obtained by surface-treating aluminum or stainless steel with carbon, nickel, titanium, silver, or the like. In this application, the positive electrode current collector may further include a non-metal element. For example, the non-metal element includes at least one of fluorine, phosphorus, boron, chlorine, silicon, or sulfur.

The positive electrode current collector may have an appropriate thickness as needed. Although this is not particularly limited, the positive electrode current collector may have a thickness within a range of 1 µm to 500 µm, 1 µm to 300 µm, 1 µm to 100 µm, 1 µm to 50 µm, or 1 µm to 20 µm.

Unless otherwise specified, the terms thickness (or height), width, and length used in this application are average values and can be measured by using measuring instruments capable of measuring thickness (or height), width, and length respectively according to methods in the art.

The positive electrode current collector can form fine concavities and convexities on the surface, thereby further enhancing the adhesion with the positive electrode material layer. For example, the form of the positive electrode current collector may be one or more selected from film, sheet, foil, mesh, porous body, foam, and non-woven fabric.

In this application, the positive electrode material layer includes a positive electrode material. The type of the positive electrode material is not particularly limited in this application, provided that the objectives of this application can be achieved. For example, the positive electrode material may include at least one of lithium nickel cobalt manganate (LiNi_{0.90}Co_{0.05}Mn_{0.05}O₂ (NCM955), NCM811, NCM622, NCM523, and NCM111), lithium nickel cobalt aluminate, lithium iron phosphate, lithium vanadium phosphate, lithium cobalt phosphate, lithium manganese phosphate, lithium manganese iron phosphate, lithium-rich manganese-based material, lithium cobalt oxide (LiCoO₂), lithium iron silicate, lithium vanadium silicate, lithium cobalt silicate, lithium manganese silicate, spinel-type lithium manganate, spinel-type lithium nickel manganate, or lithium titanate. In this application, the positive electrode material may further include a non-metal element, for example, the non-metal element includes at least one of fluorine, phosphorus, boron, chlorine, silicon, or sulfur. In this application, the thicknesses of the positive electrode current collector and the positive electrode material layer are not particularly limited, provided that the objectives of this application can be achieved.

In some embodiments, the positive electrode material layer may further include a positive electrode binder. The type of the positive electrode binder is not particularly limited in this application, provided that the objectives of this application can be achieved. For example, the positive electrode binder may include but is not limited to at least one of polyvinylidene fluoride, polytetrafluoroethylene, polyolefin, sodium carboxymethyl cellulose, lithium carboxymethyl cellulose, modified polyvinylidene fluoride, modified styrene-butadiene rubber (SBR), or polyurethane. In some embodiments, the polyolefin binder includes at least one of polyethylene, polypropylene, polyester, polyvinyl alcohol, or polyacrylic acid.

In some embodiments, the positive electrode material layer may further include a conductive agent. The type of the conductive agent in the positive electrode material layer is not particularly limited in this application, provided that the objectives of this application can be achieved. In some exemplary embodiments, the conductive agent includes a carbon-based material, such as graphite including natural graphite or artificial graphite, carbon black including carbon black, acetylene black, Ketjen black, channel black, furnace black, lamp black, or thermal black, or carbon fiber; a metal-based material, such as metal powder or metal fiber of copper, nickel, aluminum, or silver; a conductive polymer, such as a polyphenylene derivative; a conductive metal oxide, such as zinc oxide or titanium oxide; a conductive whisker, such as potassium titanate; or a mixture formed by any combination of these substances.

In this application, the positive electrode material layer can be formed by applying a positive electrode slurry on at least one surface of the positive electrode current collector, followed by drying, and calendering can be performed after drying as needed. The positive electrode slurry includes the foregoing positive electrode material and positive electrode binder, and may further include the conductive agent as needed. In addition, the positive electrode slurry may further include a solvent. The type of the solvent is not particularly limited in this application, provided that the objectives of this application can be achieved. For example, the solvent may use an organic solvent such as N-methyl-2-pyrrolidone, propylene carbonate, ethylene carbonate, butylene carbonate, dimethyl carbonate, diethyl carbonate, γ-butyrolactone, 1,2-dimethoxyethane, tetrahydrofuran, 2-methyltetrahydrofuran, dimethyl sulfoxide, formamide, dimethylformamide, acetonitrile, nitromethane, methyl formate, methyl acetate, phosphate triester, trimethoxymethane, sulfolane, methyl sulfolane, 1,3-dimethyl-2-imidazolidinone, a propylene carbonate derivative, a tetrahydrofuran derivative, methyl propionate, alcohol, or ethyl propionate, an aqueous solvent such as water, or a mixed solvent composed of two or more of the foregoing solvents.

A mass ratio of the positive electrode material, the conductive agent, and the positive electrode binder in the positive electrode material layer is not particularly limited in this application, and persons skilled in the art can make selection based on actual needs, provided that the objectives of this application can be achieved. These mass ratios may use well-known mass ratios.

### Negative electrode

The negative electrode is not particularly limited in this application, provided that the objectives of this application can be achieved. For example, the negative electrode includes a negative electrode current collector and a negative electrode material layer disposed on at least one surface of the negative electrode current collector. In this application, the negative electrode material layer may be disposed on one surface of the negative electrode current collector in its thickness direction, or on two surfaces of the negative electrode current collector in its thickness direction. It should be noted that the "surface" herein may be an entire region or a partial region of the negative electrode current collector. This is not particularly limited in this application, provided that the objectives of this application can be achieved.

The negative electrode current collector may have an appropriate thickness as needed. Although this is not particularly limited, the negative electrode current collector may have a thickness within a range of 1 µm to 500 µm, 1 µm to 300 µm, 1 µm to 100 µm, 1 µm to 50 µm, 1 µm to 20 µm, or 5 µm to 10 µm.

The negative electrode material layer of this application includes a negative electrode material.

In some embodiments, an adhesion force between the negative electrode material layer and the negative electrode current collector is F1 N/m, where 41≤F1≤135. For example, the value of F1 may be 41, 66, 73, 74, 79, 81, 97, 100, 105, 108, 111, 135, or within a range defined by any two of these values. The adhesion force between the negative electrode material layer and the negative electrode current collector satisfying the foregoing range can prevent the negative electrode material layer from peeling off from the surface of the negative electrode current collector, and allows the negative electrode to have appropriate elasticity, which can reduce the impact of volume changes of the silicon-carbon particles during lithium intercalation and deintercalation on the negative electrode, and helps to maintain the structural stability of the negative electrode, thereby further improving the cycling performance and low-temperature load performance of the secondary battery.

In some embodiments, the negative electrode material layer further includes a binder, and the binder includes at least one selected from the group consisting of polyacrylate, polyacrylic acid, polyimide, polyamide, polyamideimide, polyvinylidene fluoride, styrene-butadiene rubber, sodium alginate, polyvinyl alcohol, polytetrafluoroethylene, polyacrylonitrile, sodium carboxymethyl cellulose, potassium carboxymethyl cellulose, sodium hydroxymethyl cellulose, and potassium hydroxymethyl cellulose.

In some embodiments, the negative electrode material layer further includes a conductive agent, and the conductive agent includes at least one selected from the group consisting of conductive carbon black, carbon nanotubes, and flake graphene.

In some embodiments, the silicon-carbon particles include porous carbon and silicon particles at least partially located in internal voids of the porous carbon.

In this application, the negative electrode material layer can be formed by applying a negative electrode slurry on at least one surface of the negative electrode current collector, followed by drying, and calendering can be performed after drying as needed. The negative electrode slurry includes the foregoing negative electrode material and negative electrode binder, and may further include the conductive agent as needed. In addition, the negative electrode slurry may further include a solvent. The type of the solvent is not particularly limited in this application, provided that the objectives of this application can be achieved. For example, the solvent may use an organic solvent such as N-methyl-2-pyrrolidone, propylene carbonate, ethylene carbonate, butylene carbonate, dimethyl carbonate, diethyl carbonate, γ-butyrolactone, 1,2-dimethoxyethane, tetrahydrofuran, 2-methyltetrahydrofuran, dimethyl sulfoxide, formamide, dimethylformamide, acetonitrile, nitromethane, methyl formate, methyl acetate, phosphate triester, trimethoxymethane, sulfolane, methyl sulfolane, 1,3-dimethyl-2-imidazolidinone, a propylene carbonate derivative, a tetrahydrofuran derivative, methyl propionate, alcohol, or ethyl propionate, an aqueous solvent such as water, or a mixed solvent composed of two or more of the foregoing solvents.

### Separator

The separator of this application is a film that prevents short circuit between the positive electrode and the negative electrode and allows electron transmission substances to pass through. The separator is not particularly limited in this application, provided that the objectives of this application can be achieved. For example, the material of the separator may include but is not limited to at least one of polyethylene (PE) and polypropylene (PP)-based polyolefin (PO), polyester (for example, polyethylene terephthalate (PET) film), cellulose, polyimide (PI), polyamide (PA), spandex, or aramid. The type of the separator may include at least one of woven film, non-woven film, microporous film, composite film, laminated film, or spinning film.

According to some embodiments of this application, the separator may include a substrate layer and a surface treatment layer. The substrate layer may be a non-woven fabric, film, or composite film having a porous structure, and the material of the substrate layer may include at least one of polyethylene, polypropylene, polyethylene terephthalate, or polyimide. Optionally, the substrate layer may be a polypropylene porous film, a polyethylene porous film, a polypropylene non-woven fabric, a polyethylene non-woven fabric, or a polypropylene-polyethylene-polypropylene porous composite film.

Optionally, the surface treatment layer is provided on at least one surface of the substrate layer, and the surface treatment layer may be a polymer layer, an inorganic substance layer, or a layer formed by mixing a polymer and an inorganic substance. For example, the inorganic substance layer includes inorganic particles and a binder. The inorganic particle is not particularly limited in this application, and for example, may include at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is not particularly limited in this application, and may be, for example, at least one of the foregoing positive electrode binders or negative electrode binders. The polymer layer includes a polymer, and the polymer is not particularly limited in this application. For example, the polymer includes at least one of polyamide, polyacrylonitrile, acrylate polymer, polyacrylic acid, polyacrylate salt, polyvinylpyrrolidone, polyvinyl ether, polyvinylidene fluoride, or poly(vinylidene fluoride-hexafluoropropylene). The thickness of the separator is not particularly limited in this application, provided that the objectives of this application can be achieved. For example, the thickness of the separator may be 5 µm to 500 µm.

### Electrolyte

In this application, the electrolyte is a medium that causes the movement of electron transmission substances to smoothly enable electrochemical reactions of the positive electrode and the negative electrode.

In some embodiments, the electrolyte includes a first type of lithium salt additive, the first type of lithium salt additive includes at least one selected from the group consisting of lithium tetrafluoroborate, lithium bis(trifluoromethanesulfonyl)imide, and lithium difluorophosphate, and a mass percentage of the first type of lithium salt additive is S1% based on a mass of the electrolyte, where 0.2≤S1≤5. For example, the value of S1 may be 0.2, 0.3, 0.4, 0.6, 0.7, 0.8, 1.0, 1.4, 1.6, 2.5, 3.2, 5, or within a range defined by any two of these values. The electrolyte includes the first type of lithium salt additive within the foregoing range, so that an SEI film with an appropriate LiF content can be formed on the surface of the silicon-carbon particles, which can improve the mechanical strength and stability of the SEI film, helps to constrain volume changes of the silicon-carbon particles during lithium intercalation and deintercalation, and helps to prevent the stress generated during lithium intercalation and deintercalation of the silicon-carbon particles from gathering at the junction of the first region and the second region on the surface of the silicon-carbon particles. This can reduce the impact of volume changes of the silicon-carbon particles during lithium intercalation and deintercalation on the silicon-carbon particles, reduce the risk of SEI breakage and increased side reactions caused by volume changes of the silicon-carbon particles during lithium intercalation and deintercalation, reduce the increased side reactions between the silicon-carbon particles and the electrolyte due to an increase in the contact area of the silicon-carbon particles, and inhibit the decomposition of the electrolyte and gas generation. In addition, the electrolyte has good infiltration, which is conducive to providing the electrolyte with good ionic conductivity, further improving the cycling performance and low-temperature load performance of the secondary battery.

In some embodiments, the electrolyte includes fluoroethylene carbonate, and a mass percentage of the fluoroethylene carbonate is S2% based on the mass of the electrolyte, where 0.5≤S2/S1≤20, and preferably 3≤S2/S1≤17. For example, the value of S2/S1 may be 0.5, 3, 8, 13, 17, 20, or within a range defined by any two of these values. The electrolyte includes the fluoroethylene carbonate within the foregoing range, so that an SEI film with an appropriate organic polymer content can be formed on the surface of the silicon-carbon particles, and can synergize with the first type of lithium salt to improve the flexibility and ductility of the SEI film generated by the first type of lithium salt on the surface of the silicon-carbon particles, which helps to constrain volume changes of the silicon-carbon particles during lithium intercalation and deintercalation, and helps to prevent the stress generated during lithium intercalation and deintercalation of the silicon-carbon particles from gathering at the junction of the first region and the second region on the surface of the silicon-carbon particles. This can reduce the impact of volume changes of the silicon-carbon particles during lithium intercalation and deintercalation on the silicon-carbon particles, and reduce the increased side reactions between the silicon-carbon particles and the electrolyte due to an increase in the contact area of the silicon-carbon particles. In addition, the electrolyte has appropriate infiltration, which is conducive to providing the electrolyte with appropriate lithium ion migration efficiency, further improving the cycling performance and low-temperature load performance of the secondary battery.

In some embodiments, the electrolyte includes a nitrile compound, and a mass percentage of the nitrile compound is S3% based on a mass of the electrolyte, where 3.2≤S3≤9.8, and preferably 4.8≤S3≤8.2. The value of S3 may be 3.2, 4.0, 4.2, 4.6, 4.8, 5.2, 6.4, 8.2, or 9.8. The nitrile compound includes at least one selected from the group consisting of malononitrile, ethylene glycol bis(propionitrile) ether, succinonitrile, glutaronitrile, adiponitrile, 1,2,3-propanetricarbonitrile, 1,3,5-pentanetricarbonitrile, 1,3,6-hexanetricarbonitrile, and 1,2,3-tris(2-cyanoethoxy)propane. The electrolyte includes the nitrile compound and the value of S3 satisfies the foregoing range, so that a stable and dense SEI film can be formed on the surface of the silicon-carbon particles, which helps to constrain volume changes of the silicon-carbon particles during lithium intercalation and deintercalation, and helps to prevent the stress generated during lithium intercalation and deintercalation of the silicon-carbon particles from gathering at the junction of the first region and the second region on the surface of the silicon-carbon particles. This can reduce the impact of volume changes of the silicon-carbon particles during lithium intercalation and deintercalation on the silicon-carbon particles, and reduce the increased side reactions between the silicon-carbon particles and the electrolyte due to an increase in the contact area of the silicon-carbon particles. In addition, the electrolyte has appropriate viscosity, which can improve the lithium ion conductivity of the electrolyte, further improving the cycling performance and low-temperature load performance of the secondary battery.

According to some embodiments of this application, the lithium salt may include but is not limited to at least one of lithium hexafluorophosphate (LiPF₆), lithium bis(oxalato)borate {LiB(C₂O₄)₂, LiBOB}, lithium difluoro(oxalato)borate {LiBF₂(C₂O₄), LiDFOB}, LiNO₃, LiClO₄, LiB(C₆H₅)₄, LiCH₃SO₃, LiCF₃SO₃, LiC(SO₂CF₃)₃, Li₂SiF₆, or lithium difluoroborate. The content of the lithium salt in the electrolyte is not limited in this application, provided that the objectives of this application can be achieved.

The non-aqueous solvent is not particularly limited in this application, provided that it can function as a medium for moving ions involved in electrochemical reactions of the battery cell. For example, the non-aqueous solvent may include but is not limited to at least one of a carbonate compound, a carboxylate compound, an ether compound, or other organic solvents. The carbonate compound may include but is not limited to at least one of a linear carbonate compound, a cyclic carbonate compound, or a fluorocarbonate compound. The linear carbonate compound may include but is not limited to at least one of dimethyl carbonate (DMC), diethyl carbonate (DEC), dipropyl carbonate, methyl propyl carbonate, ethyl propyl carbonate, or ethyl methyl carbonate (EMC). The cyclic carbonate may include but is not limited to at least one of ethylene carbonate (EC), propylene carbonate (PC), butylene carbonate, or vinyl ethylene carbonate. The fluorocarbonate compound may include but is not limited to at least one of 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, or trifluoromethylethylene carbonate. The carboxylate compound may include but is not limited to at least one of methyl formate, methyl acetate, ethyl acetate, n-propyl acetate, tert-butyl acetate, methyl propionate, ethyl propionate, propyl propionate, γ-butyrolactone, decanolide, valerolactone, or caprolactone. The ether compound may include but is not limited to at least one of 1,3-dioxolane (DOL), dimethoxyethane (1,2-dimethoxyethane, DME), dibutyl ether, tetraglyme, diglyme, 1,2-diethoxyethane, 1-ethoxy-1-methoxyethane, 2-methyltetrahydrofuran, or tetrahydrofuran. The other organic solvents may include but are not limited to a ketone solvent such as 1,3-dimethyl-2-imidazolidinone, N-methyl-2-pyrrolidone, or cyclohexanone; an aromatic hydrocarbon solvent such as benzene or fluorobenzene; an alcohol solvent such as ethanol or isopropanol; a nitrile solvent (for example, acetonitrile) such as R-CN (R is linear, branched, or cyclic hydrocarbyl having 2 to 20 carbon atoms, and may include a double bond aromatic ring or an ether bond); an amide solvent such as dimethylformamide; a dioxolane solvent such as 1,2-dioxolane or 1,3-dioxolane; a sulfone solvent such as dimethyl sulfoxide, sulfolane, or methyl sulfolane; or a phosphate solvent such as trimethyl phosphate, triethyl phosphate, or trioctyl phosphate. In the foregoing, the hydrocarbyl may be one or more selected from alkyl, alkenyl, or alkynyl.

### Electronic apparatus

This application provides an electronic apparatus including the foregoing secondary battery. The electronic apparatus of this application is not particularly limited and may be any known electronic apparatus used in the prior art. For example, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a storage card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, or a lithium-ion capacitor.

### Measurement methods

The physical performance mentioned in this application can be measured by using the following methods, and the physical performance in the following examples and comparative examples are measured by using the following methods.

### <Measurement method of cross-sectional perimeter of silicon-carbon particles and total length of linear segment feature portion>

The negative electrode plate was sliced using an ion polisher, and then silicon-carbon particles were randomly selected using a ZEISS SEM (Sigma-02-33) (0.1-30 kV) device in backscattered mode at a magnification of 1000×. Image analysis software was used to measure the perimeter of the cross section of the silicon-carbon particles (the two-dimensional image of the silicon-carbon particles under a scanning electron microscope was used as the cross section of the silicon-carbon particles) as L µm and the total length of the linear segment feature portion as X µm.

### <Measurement of average circularity of silicon-carbon particles>

The cross section of the negative electrode was observed using a scanning electron microscope in backscattered mode, and 100 silicon-carbon particles were randomly selected. The area S of the cross section of the selected silicon-carbon particles and the area S` of the circumscribed circle of the cross section of the selected silicon-carbon particles was measured, and the circularity was calculated as S/S`. The arithmetic mean of the circularities of the 100 silicon-carbon particles was calculated as the average circularity R of the silicon-carbon particles.

### <Detection of compacted density of negative electrode material>

The silicon-carbon particle powder was placed in a powder density tester mold (test mold (CARVER#3619 (13 mm)), where the test device was Sunstest UTM7305. The mold was placed in the middle of the upper and lower platens of the device. After the run command in the device was initiated, the device first pressurized to 5 T according to the set parameters and then released the pressure. The height after pressure release was recorded as the height H after compaction. The set parameters included a pressurization rate of 10 mm/min, a pressurization holding time of 30s, a pressure release rate of 30 mm/min, and a pressure release holding time of 10s. The compacted density of the powder can be calculated according to the following formula:
$P = m / V = m / \left(S\times H\right) ,$
where P is the compacted density of the powder, in g/cm³;
m is the mass of the weighed material, in g;
S is the bottom area of the mold, in cm²; and
H is the height after compaction, in cm.

### <Measurement of average aspect ratio of graphite particles>

A ZEISS SEM (Sigma-02-33) (0.1-30 kV) device was used at an accelerating voltage of 5 kV and a magnification of 1000×, image analysis software was used to measure the longest diameter and the shortest diameter of 100 randomly selected graphite particles, then the aspect ratios of all observed graphite particles in the field of view were calculated according to the formula of aspect ratio = longest diameter/shortest diameter, and the average value was taken to obtain the average aspect ratio of the graphite particles.

### <Test of adhesion force between negative electrode material layer and negative electrode current collector>

The brand of the instrument used for the test of adhesion force between the negative electrode material layer and the negative electrode current collector was Instron of model 33652. A negative electrode (width 30 mm × length 150 mm) was taken and fixed on a steel plate with double-sided tape (model: 3M9448A, width 20 mm × length 120 mm). A paper tape with the same width as the negative electrode was fixed to one side of the negative electrode with adhesive tape, a tension machine limit block was adjusted to an appropriate position, the paper tape was folded upward and slipped by 40 mm at a slipping rate of 50 mm/min, and the adhesion force between the negative electrode material layer and the negative electrode current collector under 180° (that is, stretching in the reverse direction) was tested.

### <Cycling performance test method>

At a test temperature of 25°C, the prepared secondary battery was charged to 4.5 V at a constant current of 0.7C, then charged to 0.025C at a constant voltage, left standing for 5 minutes, and discharged to 3.0 V at 0.5C. The capacity obtained in this cycle was used as the initial capacity. Then, a 0.7C charge and 0.5C discharge cycling test was performed. A ratio of the capacity of each cycle to the initial capacity was calculated to obtain a capacity degradation curve. The number of cycles to a capacity retention rate of 90% at 25°C was recorded as cycling performance of a battery under room temperature. The number of cycles was compared to compare the cycling performance of the material.

### <Low-temperature load test>

At 25°C, the prepared secondary battery was discharged to 2.8 V at 0.2C, left standing for 5 min, charged to 4.5 V at 0.5C, charged to 0.05C at a constant voltage, left standing for 5 min, discharged to 2.8 V at 0.2C, left standing for 5 min, charged to 4.5 V at 0.5C, charged to 0.05C at a constant voltage, left standing for 5 min, discharged at 0.1C for 8 h, and left standing for 5 min. Then, the ambient temperature was adjusted to -20°C, and the battery was left standing for 30 min, and then discharged at a constant current of 1C for 100 ms, at a constant current of 0.4C for 10 s, then at a constant current of 1.2C for 100 ms, and at a constant current of 0.4C for 2 s in sequence. These four continuous discharge steps were repeated 10 times, and then the voltage at that point was tested and recorded as the low-temperature load voltage.

The following describes the solutions of this application by using the lithium-ion battery as an example with reference to the following specific examples. Unless otherwise specified, the raw materials used in the following examples are all from ordinary commercially available products, and the apparatuses or devices used are all purchased from conventional market sales channels.

### Example 1

### Preparation of silicon-carbon particles:

S1. Phenol, polyvinyl alcohol, and hydrochloric acid were added at a mass ratio of 1:1.7:2 to a three-necked flask and mixed evenly, and then formaldehyde was added, where the mass ratio of the phenol to the formaldehyde was controlled to be 1:1.8. The reaction was carried out at 100°C for 2.0 h under an inert atmosphere, and then the temperature was raised to 140°C and maintained for reaction for 2.0 h to obtain a carbon precursor.

S2. Methacrylic acid with a mass of 5% based on the mass of the phenol was added to the carbon precursor, and the temperature was maintained at 140°C for reaction for 0.1 h. Then, calcium stearate with a mass of 1% based on the mass of the phenol and magnesium oleate with a mass of 0.3% based on the mass of the phenol were added, and the temperature was still maintained at 140°C for reaction for 0.1 h. After the reaction was completed, suction filtration and washing were performed to obtain an organic precursor.

S3. The organic precursor and ammonia water with a mass concentration of 2% were mixed at a mass ratio of 1:10, reacted at 60°C for 2 h, and then left standing for 1 h, followed by filtration, washing, and drying, to obtain a cured product. The cured product was heated to 600°C at a heating rate of 5°C/min under a nitrogen atmosphere, and the temperature was maintained for reaction for 2 h. After the reaction was completed, the product was cooled to room temperature to obtain a carbonized product.

S4. The carbonized product, potassium hydroxide, and sodium carbonate were mixed at a mass ratio of 1:1:0.5 and reacted at 750°C for 1 h. After the reaction was completed, the product was cooled to room temperature, followed by washing and drying, to obtain a porous carbon material.

S5. At 600°C, a silane inert mixed gas with a silane concentration of 25% was used to deposit the porous carbon material for 15 h, then the ambient temperature was reduced to 580°C, and a mixed gas of acetylene and nitrogen at a volume ratio of 1:1 was introduced for 9 h, with the remaining being an inert gas, to obtain silicon-carbon particles.

### Preparation of negative electrode:

The prepared silicon-carbon particles and artificial graphite were mixed at a mass ratio of 10:90 to obtain a negative electrode active material. The negative electrode active material (95wt%), single-walled carbon nanotubes (0.5wt%), polyacrylic acid (3.5%), and carboxymethyl cellulose (1%) were mixed, then deionized water was added, and the mixture was stirred to uniformity to produce a negative electrode slurry. The negative electrode slurry was uniformly applied onto one surface of a copper foil and then dried. The same steps were repeated on another surface of the copper foil to obtain a negative electrode plate coated with negative electrode material layers on two surfaces. The coated copper foil was dried, pressurized, cut into a specified size, and welded with tabs to produce the negative electrode.

### Preparation of positive electrode:

Lithium cobalt oxide (97wt%), conductive carbon black (1.5wt%), and polyvinylidene fluoride (1.5wt%) were dissolved in N-methylpyrrolidone to produce a positive electrode slurry. The lithium cobalt oxide used was lithium cobalt oxide co-doped with Al and Mg. Based on a mass of the lithium cobalt oxide, a mass percentage of Al was 0.3% and a mass percentage of Mg was 0.4%. The positive electrode slurry was uniformly applied onto one surface of an aluminum foil and then dried. The same steps were repeated on another surface of the aluminum foil to obtain a positive electrode plate coated with positive electrode material layers on two surfaces. The coated aluminum foil was dried, pressurized, cut into a specified size, and welded with tabs to produce the positive electrode.

### Preparation of separator:

A 12 µm thick microporous polyethylene (PE) film was used as the separator.

### Preparation of electrolyte:

In an argon atmosphere glove box with a moisture content less than 10 ppm, propyl propionate, ethyl propionate, propylene carbonate, and ethylene carbonate (at a mass ratio of 3:1:1:1) were mixed to obtain a base solvent, and then lithium hexafluorophosphate, lithium tetrafluoroborate, lithium bis(trifluoromethanesulfonyl)imide, fluoroethylene carbonate, adiponitrile, succinonitrile, 1,3,6-hexanetricarbonitrile, vinyl sulfate, vinylene carbonate, and 1,3-propane sultone were added to the base solvent and mixed evenly to obtain the electrolyte. Based on a mass of the electrolyte, a mass percentage of the lithium hexafluorophosphate was 12.5%, a mass percentage of the lithium tetrafluoroborate was 1%, a mass percentage of the lithium bis(trifluoromethanesulfonyl)imide was 4%, a mass percentage of the fluoroethylene carbonate was 2.5%, a mass percentage of the adiponitrile was 2%, a mass percentage of the succinonitrile was 2%, a mass percentage of the 1,3,6-hexanetricarbonitrile was 2.4%, a mass percentage of the vinyl sulfate was 0.5%, a mass percentage of the vinylene carbonate was 0.5%, and a mass percentage of the 1,3-propane sultone was 3%, with the remaining being the base solvent.

### Battery manufacturing:

The positive electrode, the separator, and the negative electrode were sequentially stacked so that the separator was located between the positive electrode and the negative electrode for separation. Then, the resulting stack was wound to obtain an electrode assembly. The electrode assembly was placed into an outer package aluminum-plastic film and baked, and the electrolyte was then injected, followed by processes such as vacuum sealing, standing, formation, shaping, and capacity testing, to obtain a lithium-ion battery.

### Comparative Example 1

Comparative Example 1 is the same as Example 1, except that during the preparation of the silicon-carbon particles, calcium stearate and magnesium oleate were not added in step S2.

Examples 2 to 12 and Comparative Example 1 differ from Example 1 only in that the perimeter L µm of the cross section of the silicon-carbon particles, the length X µm of the feature portion of the silicon-carbon particles, the average circularity R of the silicon-carbon particles, and the average aspect ratio Y of the graphite particles were adjusted according to Table 1. The specific adjustment parameters and performance test results are shown in Table 1 below.

The cross section of the silicon-carbon particles in Comparative Example 1 was measured, and the contour line of the cross section of the silicon-carbon particles in Comparative Example 1 included no linear segment feature portion.

The value of X/L can be increased by increasing the addition amount of the methacrylic acid, the calcium stearate, or the magnesium oleate during the preparation of the silicon-carbon particles.

**Table 1**

| | Perimeter L of cross section of silicon-carbon particles (µm) | Total length X of linear segment feature portion (µm) | X/L | Circularity R of silicon-carbon particles | Compacted density P of silicon-carbon particles (g/cm³) | The average aspect ratio Y of graphite particles | Adhesion force F1 between negative electrode material layer and negative electrode current collector (N/m) | Cycles to 90% at 25°C | Voltage after 10 loads following discharge to 2.8 V at -20°C (V) |
|---|---|---|---|---|---|---|---|---|---|
| Example 1 | 80 | 16 | 0.2 | 0.7 | 0.97 | 1.7 | 41 | 1001 | 2.51 |
| Example 2 | 65 | 20 | 0.3 | 0.7 | 1.06 | 1.7 | 66 | 1046 | 2.56 |
| Example 3 | 15 | 11 | 0.7 | 0.7 | 1.22 | 1.7 | 111 | 1112 | 2.6 |
| Example 4 | 5 | 4 | 0.8 | 0.7 | 1.27 | 1.7 | 135 | 982 | 2.46 |
| Example 5 | 20 | 8 | 0.4 | 0.55 | 1.04 | 2.4 | 105 | 988 | 2.5 |
| Example 6 | 20 | 8 | 0.4 | 0.64 | 1.1 | 2.4 | 97 | 1056 | 2.57 |
| Example 7 | 20 | 8 | 0.4 | 0.85 | 1.17 | 2.4 | 81 | 1012 | 2.53 |
| Example 8 | 20 | 8 | 0.4 | 0.9 | 1.23 | 2.4 | 73 | 902 | 2.44 |
| Example 9 | 30 | 15 | 0.5 | 0.8 | 1.25 | 1.1 | 74 | 990 | 2.47 |
| Example 10 | 30 | 15 | 0.5 | 0.8 | 1.21 | 1.3 | 79 | 1032 | 2.55 |
| Example 11 | 30 | 15 | 0.5 | 0.8 | 1.09 | 3.2 | 100 | 1089 | 2.58 |
| Example 12 | 30 | 15 | 0.5 | 0.8 | 1.03 | 3.7 | 108 | 967 | 2.45 |
| Comparative Example 1 | 10 | / | / | 0.88 | 1.41 | 1.2 | 17 | 788 | 2.13 |

It can be seen from Table 1 that in this application, the silicon-carbon particles include the feature portion and satisfy 0.2≤X/L≤0.8, so that the silicon-carbon particles can have excellent compacted density and the secondary battery can have excellent cycling performance. In particular, when 0.3≤X/L≤0.7 is satisfied, the compacted density of the silicon-carbon particles can be further increased and the cycling performance of the secondary battery can be further improved.

In particular, when the average circularity of the silicon-carbon particles satisfies 0.55≤R≤0.90, the compacted density of the silicon-carbon particles can be further increased and the cycling performance of the secondary battery can be further improved. In particular, when 0.64≤R≤0.85 is satisfied, the compacted density of the silicon-carbon particles can be further increased and the cycling performance of the secondary battery can be further improved.

In particular, when the average aspect ratio of the graphite particles satisfies 1.1≤Y≤3.7, the compacted density of the silicon-carbon particles can be further increased and the cycling performance of the secondary battery can be further improved. In particular, when 1.3≤Y≤3.2 is satisfied, the compacted density of the silicon-carbon particles can be further increased and the cycling performance of the secondary battery can be further improved.

Examples 2-1 to 2-16 differ from Example 2 only in that the type of the lithium salt additive, the mass percentage S1% of the lithium salt additive, the mass percentage S2% of the fluoroethylene carbonate, the type of the nitrile compound, and the mass percentage S3% of the nitrile compound were adjusted according to Table 2. The specific adjustment parameters and performance test results are shown in Table 2 below.

When the components in the electrolyte were adjusted, the amount of the base solvent was adaptively adjusted so that the mass ratio of the components in the base solvent remained unchanged.

**Table 2**

| | Type of first type of lithium salt additive | Mass percentage S1% of first type of lithium salt additive | Mass percentage S2% of fluoroethylene carbonate | S2/S1 | Type of nitrile compound | Mass percentage S3% of nitrile compound | Cycles to 90% at 25°C | Voltage after 10 loads following discharge to 2.8 V at - 20°C (V) |
|---|---|---|---|---|---|---|---|---|
| Example 2 | Lithium tetrafluoroborate + lithium bis(trifluoromethanesulfonyl)imide | 1+4 | 2.5 | 1 | Adiponitrile + succinonitrile + 1,3,6-hexanetricarbonitrile | 2+2+2.4 | 1046 | 2.56 |
| Example 2-1 | Lithium tetrafluoroborate + lithium bis(trifluoromethanesulfonyl)imide | 1.2+2 | 9.6 | 3 | Adiponitrile + succinonitrile + 1,3,6-hexanetricarbonitrile | 2+2+2.4 | 1074 | 2.59 |
| Example 2-2 | Lithium tetrafluoroborate + lithium difluorophosphate | 0.4+0.2 | 10.2 | 17 | Adiponitrile + succinonitrile + 1,3,6-hexanetricarbonitrile | 2+2+2.4 | 1129 | 2.64 |
| Example 2-3 | Lithium tetrafluoroborate | 0.2 | 4 | 20 | Adiponitrile + succinonitrile + 1,3,6-hexanetricarbonitrile | 2+2+2.4 | 1054 | 2.57 |
| Example 2-4 | Lithium tetrafluoroborate + lithium difluorophosphate | 1.0+0.4 | 11.2 | 8 | Adiponitrile + succinonitrile + 1,3,6-hexanetricarbonitrile | 1+1+1.2 | 1066 | 2.58 |
| Example 2-5 | Lithium tetrafluoroborate + lithium difluorophosphate | 1.0+0.4 | 11.2 | 8 | Adiponitrile + succinonitrile + 1,3,6-hexanetricarbonitrile | 1.5+1.5+1.8 | 1085 | 2.6 |
| Example 2-6 | Lithium tetrafluoroborate + lithium difluorophosphate | 1.0+0.4 | 11.2 | 8 | Adiponitrile + succinonitrile + 1,3,6-hexanetricarbonitrile | 2.5+2.5+3.2 | 1120 | 2.63 |
| Example 2-7 | Lithium tetrafluoroborate + lithium difluorophosphate | 1.0+0.4 | 11.2 | 8 | Adiponitrile + succinonitrile + 1,3,6-hexanetricarbonitrile | 3+3+3.8 | 1073 | 2.58 |
| Example 2-8 | Lithium tetrafluoroborate + lithium bis(trifluoromethanesulfonyl)imide | 1.6+1.6 | 9.6 | 3 | Adiponitrile + succinonitrile + 1,3,6-hexanetricarbonitrile | 2+2+2.4 | 1077 | 2.59 |
| Example 2-9 | Lithium tetrafluoroborate + lithium bis(trifluoromethanesulfonyl)imide | 1.6+1.6 | 9.6 | 3 | Adiponitrile + succinonitrile + 1,3,6-hexanetricarbonitrile | 2+2+2.4 | 1002 | 2.61 |
| Example 2-10 | Lithium tetrafluoroborate + lithium difluorophosphate | 0.6+0.2 | 10.4 | 13 | Adiponitrile + succinonitrile | 2+2 | 1048 | 2.55 |
| Example 2-11 | Lithium tetrafluoroborate + lithium difluorophosphate | 0.6+0.2 | 10.4 | 13 | 1,2-bis(2-cyanoethoxy)ethane + adiponitrile | 2+2.2 | 1053 | 2.55 |
| Example 2-12 | Lithium tetrafluoroborate + lithium difluorophosphate | 0.6+0.2 | 10.4 | 13 | 1,2-bis(2-cyanoethoxy)ethane + succinonitrile | 2.1+2.5 | 1059 | 2.56 |
| Example 2-13 | Lithium tetrafluoroborate + lithium difluorophosphate | 0.6+0.2 | 10.4 | 13 | 1,3,6-hexanetricarbonitrile | 5.2 | 1039 | 2.54 |
| Example 2-14 | Lithium bis(trifluoromethanesulfonyl)imide | 0.8 | 10.4 | 13 | Adiponitrile + succinonitrile | 1+1 | 996 | 2.51 |
| Example 2-15 | Lithium tetrafluoroborate | 0.4 | 8.8 | 22 | Adiponitrile + succinonitrile | 2+2 | 994 | 2.5 |
| Example 2-16 | Lithium difluorophosphate | 0.4 | 8.8 | 22 | Adiponitrile + succinonitrile | 1+1 | 938 | 2.46 |

It can be seen from Table 2 that when the electrolyte includes the first type of lithium salt additive and the fluoroethylene carbonate and satisfies 0.5≤S2/S1≤20, the cycling performance of the secondary battery can be further improved. In particular, when 3≤S2/S1≤17 is satisfied, the cycling performance of the secondary battery can be further improved.

In particular, when the electrolyte includes the nitrile compound and satisfies 3.2≤S3≤9.8, the cycling performance of the secondary battery can be further improved. In particular, when 4.8≤S3≤8.2 is satisfied, the cycling performance of the secondary battery can be further improved.

### Example 13

Example 13 is the same as Example 1 except for the following specially described steps.

### Preparation of negative electrode:

After the negative electrode was prepared in the same manner as in Example 1, the negative electrode material layers on two sides of the negative electrode were subjected to laser grooving. The depth of the grooves was 30 µm, and the perpendicular distance between the grooves was 1.5 mm.

### Preparation of positive electrode:

The lithium cobalt oxide used contained elements Al, Mg, Ti, Zr, La, Y, Ce, and W. Based on the mass of the lithium cobalt oxide, the mass percentage of Al was 0.7%, the mass percentage of Mg was 0.3%, and the mass percentages of the elements Ti, Zr, La, Y, Ce, and W were each independently 0.1%.

After the positive electrode was prepared in the same manner as in Example 1, the positive electrode plate was embossed using an embossing roller. The surface of the embossed positive electrode plate had convex portions and concave portions, where the area of the convex portions was 3 mm², the area of the concave portions was 3 mm², the height of the convex portions was 25 µm, and the depth of the concave portions was 28 µm.

### Preparation of separator:

Coatings containing aluminum oxide and polyvinylidene fluoride were provided on two sides of the 12 µm thick microporous polyethylene (PE) film. The mass percentage of the aluminum oxide in the coating facing toward the positive electrode was 75%, and the mass percentage of the aluminum oxide in the coating facing toward the negative electrode was 45%.

### Preparation of electrolyte:

The electrolyte was prepared in an argon atmosphere glove box with a moisture content less than 10 ppm to obtain the electrolyte with the components and percentages shown in the following table. The mass percentages of the components shown in the following table are all based on the mass of the electrolyte.

| | |
|---|---|
| Propyl propionate 40% | Ethyl propionate 10% |
| Propylene carbonate 7% | Ethylene carbonate 7% |
| Lithium hexafluorophosphate 10% | Lithium bis(trifluoromethanesulfonyl)imide 3% |
| Lithium tetrafluoroborate 1% | Lithium difluorophosphate 1% |
| Adiponitrile 1.5% | Succinonitrile 1.5% |
| Ethylene glycol bis(propionitrile) ether 1.5% | 1,3,6-hexanetricarbonitrile 2% |
| 1,2,3-tris(2-cyanoethoxy)propane 1% | 1,3-propane sultone 2% |
| Vinyl sulfate 1% | Vinylene carbonate 0.5% |
| Fluoroethylene carbonate 5% | 2,2-difluoroethyl acetate 5% |

In Example 13, the number of cycles to 90% at 25°C is 1598, and the voltage after 10 loads following discharge to 2.8 V at -20°C is 2.70 V.

The foregoing descriptions are merely preferred embodiments of this application, but are not intended to limit this application. Any modification, equivalent replacement, or improvement made without departing from the principle of this application shall fall within the protection scope of this application.

## Claims

1. A negative electrode material, wherein the negative electrode material comprises silicon-carbon particles, a perimeter of a cross section of the silicon-carbon particles is L µm, a contour line of the cross section comprises at least one linear segment feature portion, and a total length of the linear segment feature portion is X µm, wherein 0.2≤X/L≤0.8.

2. The negative electrode material according to claim 1, wherein the negative electrode material satisfies at least one of the following conditions: $0.3 \leq X / L \leq 0.7 ;$ (1) and $5 \leq L \leq 80 .$ (2)

3. The negative electrode material according to claim 1 or 2, wherein an average circularity of the silicon-carbon particles is R, wherein 0.55≤R≤0.90.

4. The negative electrode material according to claim 3, wherein 0.64≤R≤0.85.

5. The negative electrode material according to any one of claims 1 to 4, wherein a compacted density of the silicon-carbon particles is P g/cm³, wherein 0.97≤P≤1.27.

6. The negative electrode material according to any one of claims 1 to 5, wherein the negative electrode material comprises graphite particles, and an average aspect ratio of the graphite particles is Y, wherein 1.1≤Y≤3.7.

7. The negative electrode material according to claim 6, wherein 1.3≤Y≤3.2.

8. The negative electrode material according to any one of claims 1 to 7, wherein the silicon-carbon particles comprise particles to be tested, a particle size of the particles to be tested falls within a range of 6 µm to 10 µm, and a straightness tolerance of the linear segment feature portion is not greater than 0.2 µm.

9. A secondary battery, comprising a positive electrode, a negative electrode, and an electrolyte, wherein the negative electrode comprises a negative electrode current collector and a negative electrode material layer located on at least one surface of the negative electrode current collector, wherein the negative electrode material layer comprises the negative electrode material according to any one of claims 1 to 8.

10. The secondary battery according to claim 9, wherein an adhesion force between the negative electrode material layer and the negative electrode current collector is F1 N/m, wherein 41≤F1≤135.

11. The secondary battery according to claim 9 or 10, wherein the electrolyte comprises a first type of lithium salt additive, the first type of lithium salt additive comprises at least one selected from the group consisting of lithium tetrafluoroborate, lithium bis(trifluoromethanesulfonyl)imide, and lithium difluorophosphate, and a mass percentage of the first type of lithium salt additive is S1% based on a mass of the electrolyte, wherein 0.2≤S1≤5.

12. The secondary battery according to claim 11, wherein the electrolyte comprises fluoroethylene carbonate, and a mass percentage of the fluoroethylene carbonate is S2% based on the mass of the electrolyte, wherein 0.5≤S2/S1≤20.

13. The secondary battery according to any one of claims 9 to 12, wherein the electrolyte comprises a nitrile compound, and a mass percentage of the nitrile compound is S3% based on a mass of the electrolyte, wherein 3.2≤S3≤9.8; wherein
the nitrile compound comprises at least one selected from the group consisting of malononitrile, ethylene glycol bis(propionitrile) ether, succinonitrile, glutaronitrile, adiponitrile, 1,2,3-propanetricarbonitrile, 1,3,5-pentanetricarbonitrile, 1,3,6-hexanetricarbonitrile, and 1,2,3-tris(2-cyanoethoxy)propane.

14. The secondary battery according to any one of claims 9 to 13, wherein the secondary battery satisfies at least one of the following conditions:
(1) the negative electrode material layer further comprises a binder, and the binder comprises at least one selected from the group consisting of polyacrylate, polyacrylic acid, polyimide, polyamide, polyamideimide, polyvinylidene fluoride, styrene-butadiene rubber, sodium alginate, polyvinyl alcohol, polytetrafluoroethylene, polyacrylonitrile, sodium carboxymethyl cellulose, potassium carboxymethyl cellulose, sodium hydroxymethyl cellulose, and potassium hydroxymethyl cellulose;
(2) the negative electrode material layer further comprises a conductive agent, and the conductive agent comprises at least one selected from the group consisting of conductive carbon black, carbon nanotubes, and flake graphene; or
(3) the silicon-carbon particles comprise porous carbon and silicon particles at least partially located in internal voids of the porous carbon.

15. An electronic apparatus, comprising the secondary battery according to any one of claims 9 to 14.
